(19) Europäisches Patentamt
European Patent Office
Office européen des brevets

(11) **EP 2 383 753 A1**

(12) **EUROPEAN PATENT APPLICATION**
published in accordance with Art. 153(4) EPC

(43) Date of publication:
**02.11.2011 Bulletin 2011/44**

(51) Int Cl.:
*H01B 7/00* (2006.01)  *H01B 7/04* (2006.01)
*H01B 7/08* (2006.01)  *H02G 11/00* (2006.01)
*H04M 1/02* (2006.01)  *H01B 11/20* (2006.01)

(21) Application number: **10741083.9**

(22) Date of filing: **09.02.2010**

(86) International application number:
**PCT/JP2010/000803**

(87) International publication number:
**WO 2010/092803 (19.08.2010 Gazette 2010/33)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.02.2009 JP 2009030097**

(71) Applicant: **Fujikura, Ltd.**
**Tokyo 135-8512 (JP)**

(72) Inventors:
• **NAKAZAKI, Shigeru**
  **Sakura-shi**
  **Chiba 285-8550 (JP)**
• **SHINOHARA, Tomoyuki**
  **Sakura-shi**
  **Chiba 285-8550 (JP)**

(74) Representative: **Cabinet Plasseraud**
**52, rue de la Victoire**
**75440 Paris Cedex 09 (FR)**

(54) **HARNESS FOR ELECTRONIC DEVICE WIRING AND ELECTRONIC DEVICE**

(57) A harness for electronic device wiring of the present invention, wherein a portion covered by a jacket in a state where each of the electrical wires is bundled so as to be arranged in parallel with each other forms a flat cable part wound around a rotary shaft so that a parallel direction thereof is perpendicular to the overlapping surface, and a portion which is continuous with the flat cable part and in which each of the electrical wires is exposed forms a jacket strip part which is more distant from the rotary shaft than the flat cable part is.

FIG. 4

## Description

Technical Field

The present invention relates to a harness for electronic device wiring and an electronic device including the same.
Priority is claimed on Japanese Patent Application No. 2009-30097, filed on Feburary 12, 2009, the contents of which are incorporated herein by reference.

Background Art

Recently, in electronic devices such as cellular phones, there has been rapid progress in the size and weight reduction thereof, as well as increased multi-functionality. In addition, as a technological trend in these types of electronic devices, for example, in cellular phones, the demand for using micro coaxial cable assemblies in internal wiring materials thereof instead of flexible printed wiring boards (hereinafter, referred to as FPC) has increased. This is because the transmission characteristics or the noise resistance characteristics of micro coaxial cables are adaptable to the needs of the market.
For example, structures used in portable devices include a slide structure-type device in which a movable-side housing is provided so as to be slidable with respect to a fixed-side housing, or a rotation structure-type device in which the movable-side housing is provided so as to be rotatable with respect to the fixed-side housing.
Circuit boards are respectively provided in each of the housings. In the slide structure-type device, FPCs are often used as wiring materials for electrically connecting these circuit boards. On the other hand, in the rotation structure-type device, micro coaxial cables are often used as wiring materials for connecting the circuit boards.
Incidentally, there are cases where the coaxial cables are used as wiring materials which are used in the slide structure-type device.
For example, the following Patent Document 1 discloses a connection structure of coaxial cables for connecting two boards sliding with respect to each other using a plurality of coaxial cables in which each core is shielded for signal transmission. A plurality of these coaxial cables is bundled at both ends thereof so that each of the coaxial cables is arranged side by side on a plane surface. Regions in which each of the intermediate portions of these coaxial cables is not bundled are kept as extra lengths.

Patent Documents

[Patent Document 1] Japanese Unexamined Patent Application, First Publication No. 2007-36515

Disclosure of the Invention

Problem that the Invention is to solve

In the rotation structure-type device, although the movable-side housing is axially supported to be rotatable with respect to the fixed-side housing by a shaft having a through-hole at the center thereof, the circuit boards of each of the housings are often connected to each other by micro coaxial cables through the above-mentioned through-hole.
However, since the micro coaxial cables are twisted or bent with the rotation of the movable-side housing, it is necessary to set the size of the through-hole in consideration of this bending. In addition, it is necessary to increase the thickness of the shaft to some extent in order to secure the strength of the shaft. As a result, the shaft grows in size, and thus it is difficult to achieve miniaturization, thinning, and weight saving in regard to the electronic device.
For this reason, it is considered that the shaft should be formed in a solid shape, and the through-hole for inserting the micro coaxial cables should be formed at a position deviating from this shaft.
However, when the through-hole is formed at a position deviating from the shaft, there is a concern that the amount of rotation of the micro coaxial cables wired at the movable-side housing side may increase, or the micro coaxial cables may become bent and bending stress is locally concentrated thereon. There is also a problem in that the micro coaxial cables may be disconnected by repeating this process many times.
The present invention was made in view of such circumstances, and an object thereof is to provide a harness for electronic device wiring and an electronic device capable of preventing cables from being disconnected and of achieving long-life while achieving miniaturization, thinning, and weight saving in regard to the electronic device.

Means for solving the Problem

The present invention adopts the followings in order to solve the above-mentioned problems and to achieve such an object. That is,

(1) There is provided a harness for electronic device wiring of the present invention that electrically connects a first circuit board provided in a fixed-side housing having an overlapping surface and a second circuit board provided in a movable-side housing which is attached to the fixed-side housing so as to be rotatable about a rotary shaft perpendicular to the overlapping surface, including: a plurality of electrical wires that connect the first circuit board and the second circuit board, and a jacket that covers these electrical wires so that a portion in a longitudinal direction thereof is exposed, wherein a portion covered by the jacket in a state where each of the electrical wires is bundled so as to be arranged in parallel with each other forms a flat cable part wound around the rotary shaft so that a parallel direction thereof is perpendicular to the overlapping surface, and the portion which is continuous with the flat cable part and in which each of the electrical wires is exposed forms a jacket strip part which is more distant from the rotary shaft than the flat cable part is.

According to the harness for electronic device wiring of the above (1), since the jacket strip part in which a plurality of electrical wires is bundled is wired at a position deviating from the rotary shaft, the jacket strip part is difficult to twist. In addition to this, each of the electrical wires within the flat cable part is wound around the rotary shaft in the state where the electrical wires are bundled so that the parallel direction thereof is perpendicular to the overlapping surface. Therefore, even when the flat cable part is displaced (expanded in diameter and reduced in diameter) with the rotation of the movable-side housing, it is possible to prevent a bent portion such as those which locally generate stress from being formed in this flat cable part. As a result, since a shaft for axially supporting the fixed-side housing and the movable-side housing so as to be rotatable can be solidly formed, it is possible to achieve thinning or miniaturization of the electronic device. In addition, it is possible to prevent the harness for electronic device wiring from being disconnected, and to achieve life prolongation thereof.

(2) Meanwhile, in the harness for electronic device wiring of the above (1), it is preferable that the flat cable part is wound once around the rotary shaft and is formed in an $\alpha$-shape.

(3) In the harness for electronic device wiring of the above (1), it is preferable that the jacket strip part is disposed further toward an outer side in a radial direction of the rotary shaft than a range in which the flat cable part is displaced with a rotation of the movable-side housing.

In the case of the above (3), since the jacket strip part is disposed further toward the outer side in the radial direction of the rotary shaft than a range in which the flat cable part is displaced (expanded in diameter and reduced in diameter), it is possible to prevent the jacket strip part and the flat cable part from interfering with each other. For this reason, it is possible to prevent the harness for electronic device wiring from being damaged, and to achieve life prolongation thereof.

(4) It is preferable that the harness for electronic device wiring of the above (1) further includes a connector that removably connects the flat cable part with respect to the second circuit board.

In the case of the above (4), it is possible to easily attach and detach the harness for electronic device wiring to and from the second circuit board.

(5) In the harness for electronic device wiring of the above (4), it is preferable that when a width dimension in the parallel direction of each of the electrical wires in the flat cable part is set to Wf, a width dimension in a direction perpendicular to the overlapping surface of the connector is set to Wc, and a depth dimension of a flat cable receiving portion, provided in the fixed-side housing, for receiving the flat cable part is set to Hf, the width dimension Wf of the flat cable part and the width dimension Wc of the connector satisfy the expression of $Hf > Wf + Wc$.

In the case of the above (5), since the depth dimension Hf of the flat cable receiving portion is not set to be larger than necessary, it is possible to achieve further thinning or miniaturization of the electronic device.

(6) There is provided an electronic device of the present invention including: the harness for electronic device wiring of the above (1); the fixed-side housing; and the movable-side housing, wherein a through-hole into which the jacket strip part is inserted is formed in the fixed-side housing at a position which is more distant from the rotary shaft than the flat cable part is, and a flat cable receiving portion that receives the flat cable part wound around the rotary shaft so that a parallel direction thereof is perpendicular to the overlapping surface is formed between the fixed-side housing and the movable-side housing.

According to the electronic device of the above (6), since the harness for electronic device wiring is adopted which has the flat cable part in which each of the electrical wires is wound around the rotary shaft in the state where the electrical wires are bundled so that the parallel direction thereof is perpendicular to the overlapping surface, it is possible to prevent the bent portion from being formed in this harness for electronic device wiring. For this reason, it is possible to solidly form the rotary shaft for axially supporting the fixed-side housing and the movable-side housing so as to be rotatable, and to achieve thinning or miniaturization of the electronic device. In addition, it is possible to prevent the harness for electronic device wiring from being disconnected, and to achieve life prolongation thereof.

(7) In the electronic device of the above (6), it is preferable that the movable-side housing is rotatable in a range of ±1800 from a state of overlapping the fixed-side housing.

In the case of the above (7), since each of the electrical wires within the flat cable part is wound around the rotary shaft in the state where the electrical wires are bundled so that the parallel direction thereof is perpendicular to the overlapping surface, there is no concern that the flat cable part may be bent even when the rotation range of the movable-side housing is increased. For this reason, the rotation range of the movable-side housing can be easily set to be large. In addition, the rotational movement of the movable-side housing can be smoothly performed.

Effects of the Invention

According to the harness for electronic device wiring and the electronic device of the present invention, it is possible to prevent the cables from being disconnected and to achieve life prolongation of the cables while achieving thinning, miniaturization, or weight saving of the electronic device.

Brief Description of the Drawings

FIG 1 is a plan view illustrating a closed state of an electronic device according to an embodiment of the present invention.
FIG. 2 is a plan view illustrating an open state of the electronic device.
FIG. 3 is a partial cross-sectional view taken along the A-A line of FIG. 1.
FIG. 4 is a perspective view illustrating a harness for electronic device wiring according to the embodiment.
FIG. 5 is a cross-sectional view illustrating a flat cable of the harness for electronic device wiring.
FIG. 6A is a plan view illustrating a flat cable part according to the embodiment.
FIG. 6B is a perspective view illustrating the flat cable part.
FIG. 7 is a plan view illustrating the above-mentioned harness for electronic device wiring.
FIG. 8A is a cross-sectional view illustrating a twisted state of the above-mentioned flat cable part.
FIG 8B is a cross-sectional view illustrating an example of a twisted state when a bundle of normal micro coaxial cables is used.
FIG 9 is a perspective view illustrating a portion of the jacket strip part.
FIG. 10A is a cross-sectional view illustrating the detailed structure of the flat cable part of the above-mentioned harness for electronic device wiring.
FIG. 10B is a cross-sectional view illustrating the detailed structure of the jacket strip part of the harness for electronic device wiring.
FIG. 11A is a plan view illustrating the detailed structure of the above-mentioned flat cable part and the above-mentioned jacket strip part.
FIG. 11B is a perspective view illustrating the detailed structure of the flat cable part and the jacket strip part.
FIG. 12A is a plan view illustrating an opening and closing operation of the above-mentioned harness for electronic device wiring of which a movable-side housing is in a closed state.
FIG. 12B is a plan view illustrating the opening and closing operation when the movable-side housing is rotated clockwise.
FIG. 12C is a plan view illustrating the opening and closing operation when the movable-side housing is rotated counterclockwise.

Description of Embodiments

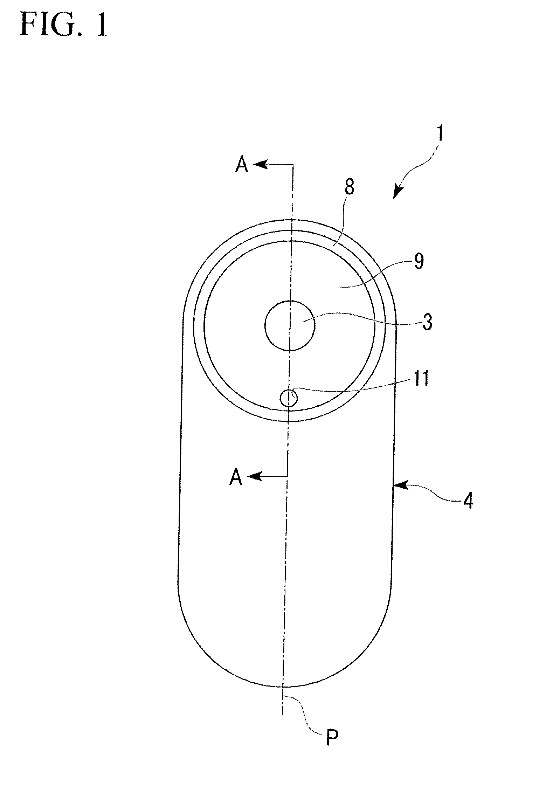

An embodiment of a harness for electronic device wiring of the present invention and an electronic device including this will be described below with reference to the drawings.
As shown in FIGS. 1 to 3, an electronic device 1 of the embodiment is a so-called rotational structure-type portable device, and includes a fixed-side housing 2; a movable-side housing 4 which is axially supported to be rotatable with respect to a rotary shaft 3 provided in this fixed-side housing 2; and a harness 7 for electronic device wiring for electrically connecting a circuit board 5 provided in the fixed-side housing 2 and a circuit board 6 provided in the movable-side housing 4.
The fixed-side housing 2 and the movable-side housing 4 are respectively formed in an approximately ellipse shape when they are seen in a plan view, and in the state where the movable-side housing 4 is closed with respect to the fixed-side housing 2, the fixed-side housing 2 and the movable-side housing 4 overlap each other (see FIG. 1).
The rotary shaft 3 of the fixed-side housing 2 is formed in a solid shape, and is provided at one end in the longitudinal direction of the fixed-side housing 2. An approximately annular-shaped rising portion 8 surrounding the rotary shaft 3 is integrally formed on a surface 2a of the fixed-side housing 2 facing the movable-side housing 4 side, when this surface 2a is seen in a plan view along the axial direction of the rotary shaft 3. A concave portion formed at the inner side in the radial direction of the rising portion 8 serves as a receiving portion 9 for receiving the harness 7 for electronic device wiring. That is, the receiving portion 9 is provided between the fixed-side housing 2 and the movable-side housing 4, and to a position corresponding to the rotary shaft 3.
In a surface 2b of the fixed-side housing 2 on the side opposite to the surface 2a facing the movable-side housing 4 side, a concave portion 10 is formed at a position corresponding to the receiving portion 9. The circuit board 5 for performing the control of an electronic component (not shown) provided in the fixed-side housing 2 is disposed in this concave portion 10.

A through-hole 11 communicating between the receiving portion 9 and the concave portion 10 is formed in the fixed-side housing 2. This through-hole 11 is for inserting a portion of the harness 7 for electronic device wiring. The through-hole 11 is formed at a position closer to an inner peripheral surface 8a of the rising portion 8 than the center position of the receiving portion 9 and the concave portion 10, and at a corresponding position on a center line P extending along the longitudinal direction of the fixed-side housing 2 through the center af the rotary shaft 3. That is, the formation position of the through-hole 11 is set at a position deviating in the direction perpendicular to the shaft line from the rotary shaft 3.

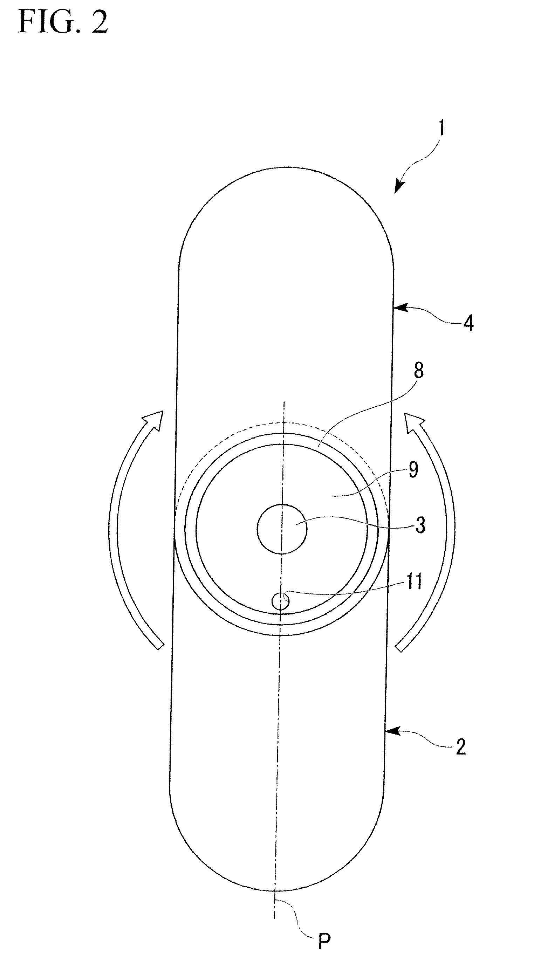

The movable-side housing 4 is attached to the fixed-side housing 2 so as to be rotatable in a range of ± 180' from the state where it is closed, that is, the state (see FIG. 1) where it overlaps the fixed-side housing 2 (see FIG. 2).

A concave portion 12 capable of being externally fitted into an outer peripheral surface 8b of the rising portion 8 is formed on a surface 4a of the movable-side housing 4 facing the fixed-side housing 2 side. The rising portion 8 is fitted into the concave portion 12, thereby allowing the movable-side housing 4 to be rotated about the center of the shaft line of the rotary shaft 3. The circuit board 6 for performing the control of an electronic component (not shown) provided in the movable-side housing 4 is disposed within the concave portion 12.

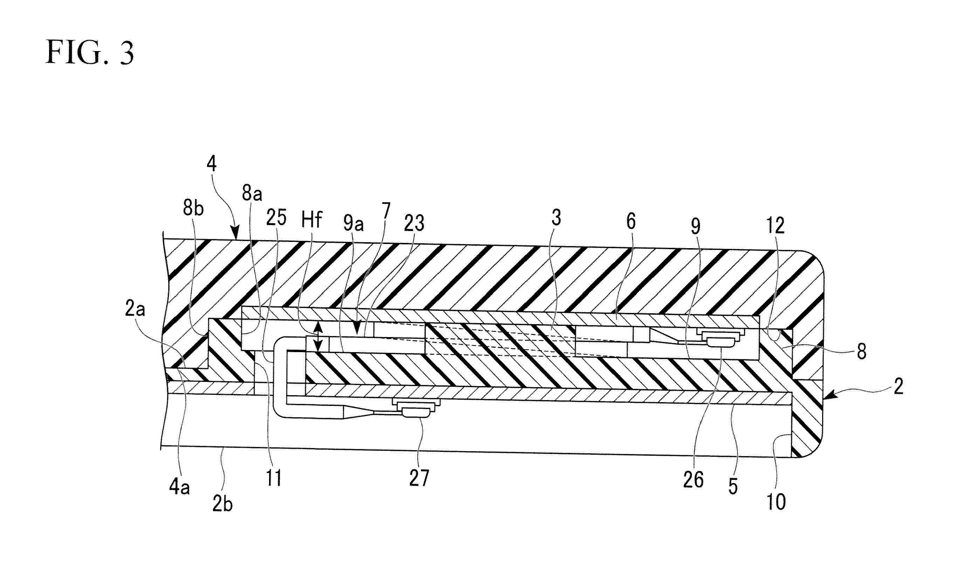

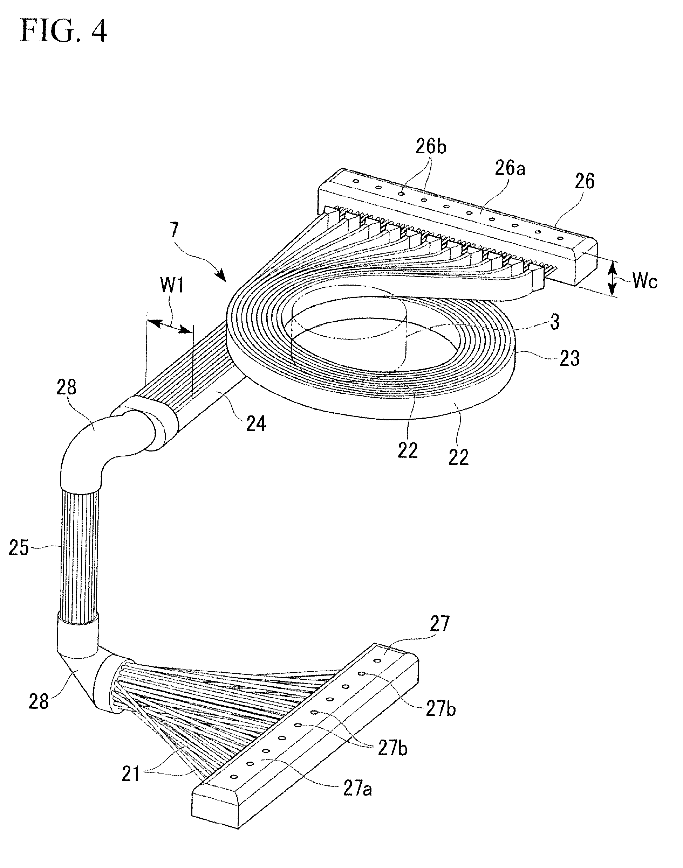

As shown in FIGS. 3 and 4, the harness 7 for electronic device wiring includes a flat cable part 23 which is disposed within the receiving portion 9 of the fixed-side housing 2; a jacket strip part 25 which extends from one end of the flat cable part 23 and is inserted into the through-hole 11 of the fixed-side housing 2; a first connector 26 provided in the other end (terminal portion) of the flat cable part 23; and a second connector 27 provided in the terminal portion of the jacket strip part 25. The jacket strip part 25 is inserted into the through-hole 11 of the fixed-side housing 2, and thus is disposed at a position deviating from the rotary shaft 3.

In the flat cable part 23, a plurality of flat cables 22 overlaps one another in which a plurality of micro coaxial cables 21 is arranged parallel to one another and is covered with a jacket 24 to thereby form a tape shape. In the jacket strip part 25, a plurality of micro coaxial cables 21 in which the jacket 24 is removed from the flat cable part 23 and is exposed is bundled by a bundle member 28.

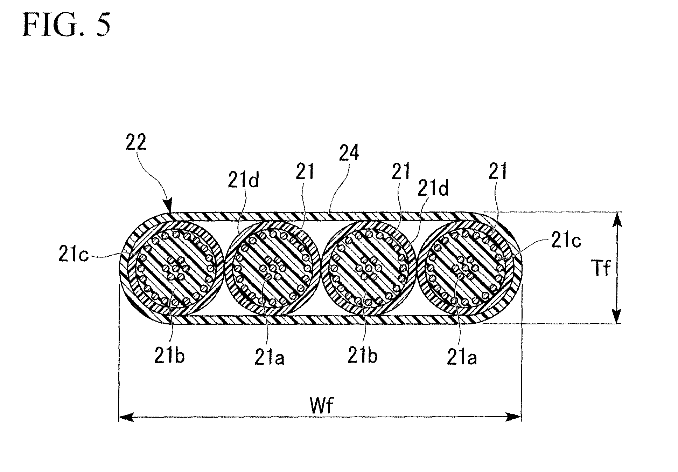

That is, as shown in FIG 5, the harness 7 for electronic device wiring includes the flat cable 22 in which a plurality of (four in the example of FIG. 5) micro coaxial cables 21, composed of a plurality of center conductors 21 a, an inner insulating layer 21b surrounding the center conductors, a plurality of outer conductors 21 c surrounding the inner insulating layer, and an outer covering 21d surrounding the outer conductors, is arranged parallel to one another, and is covered with the jacket 24 made of an ultraviolet curable resin or a fluorine resin and the like to thereby form a tape shape.

In addition, in the jacket strip part 25, the jacket 24 is removed and the micro coaxial cable 21 is exposed.

Meanwhile, in the embodiment, although the micro coaxial cable 21 is used as an electrical wire, the present invention is not limited only to this configuration. Instead of this configuration, the harness 7 for electronic device wiring may be configured, for example, by combining electrical wires which are not coaxial cables such as electrical wires for power feeding and the micro coaxial cables 21. In addition, in the present invention, the type of the micro coaxial cable 21 to be used, the combination of winding directions of the outer conductor 21 c, and the like are not also particularly limited.

Hereinafter, the flat cable part 23 of the harness 7 for electronic device wiring and jacket strip part 25 will be described in more detail.

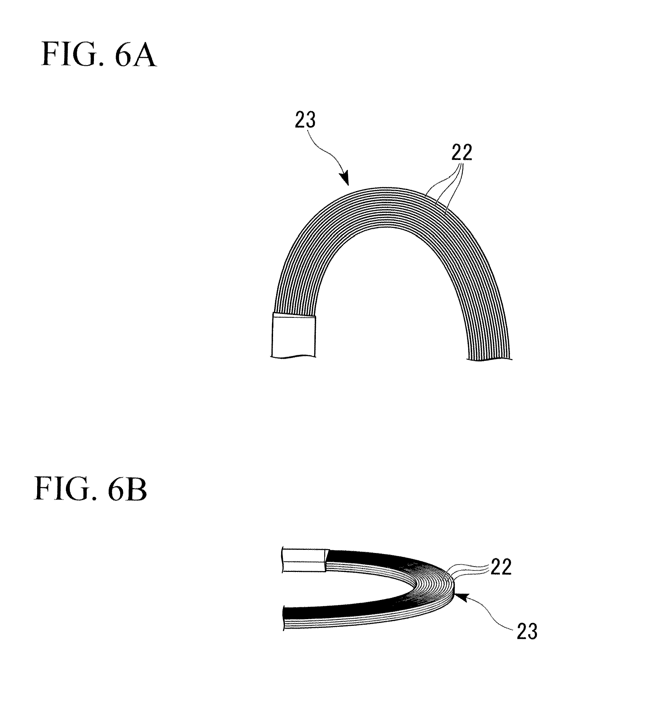

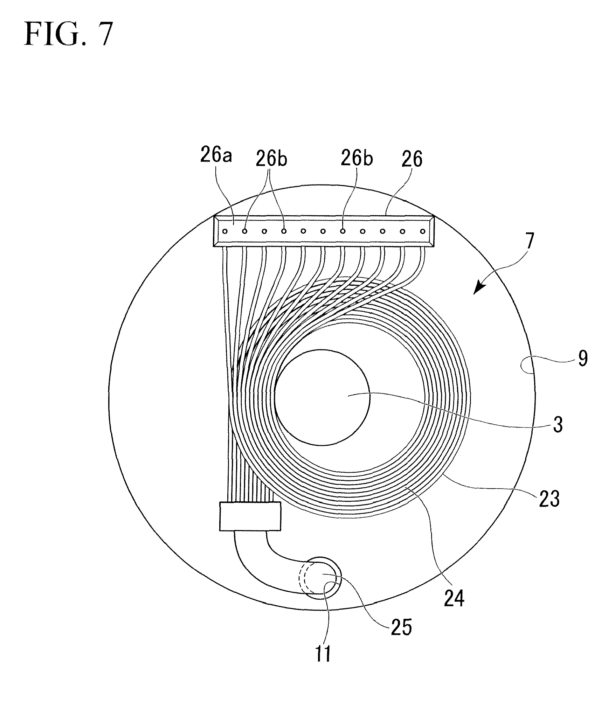

As shown in FIG. 4, FIGS. 6A and 6 B, and FIG. 7, the flat cable part 23 has a structure in which a plurality of flat cables 22 overlaps one another, and is bundled, as necessary, by a tape (not shown) and the like. The flat cable part 23 is wired within the receiving portion 9 of the fixed-side housing 2 so as to form an α-shape when this receiving portion 9 is seen in a front view along the shaft line of the rotary shaft 3. That is, the flat cable part 23 is wound in an α-shape on the planar surface (that is, bottom 9a of the receiving portion 9) intersecting the parallel direction of the micro coaxial cable 21 so as to surround the periphery of the rotary shaft 3.

In other words, this α-shape indicates a shape in the case where the flat cable part 23 is wound so that one intersection occurs between one end of the flat cable part 23 and the other end thereof.

The first connector 26 provided in the terminal portion of the flat cable part 23 is formed in an approximately rectangular plate shape. A plurality of connection terminals 26b electrically connected to the circuit board 6 is exposed and disposed at a surface 26a (surface above paper in FIG. 4) of the first connector 26 facing the circuit board 6 side. The first connector 26 is removably connected with respect to the circuit board 6 along the thickness direction of the movable-side housing 4. Since the flat cable part 23 is wound in an α-shape so as to surround the periphery of the rotary shaft 3, the connection place between the circuit board 6 and the first connector 26 is set at a position deviating from the rotary shaft 3.

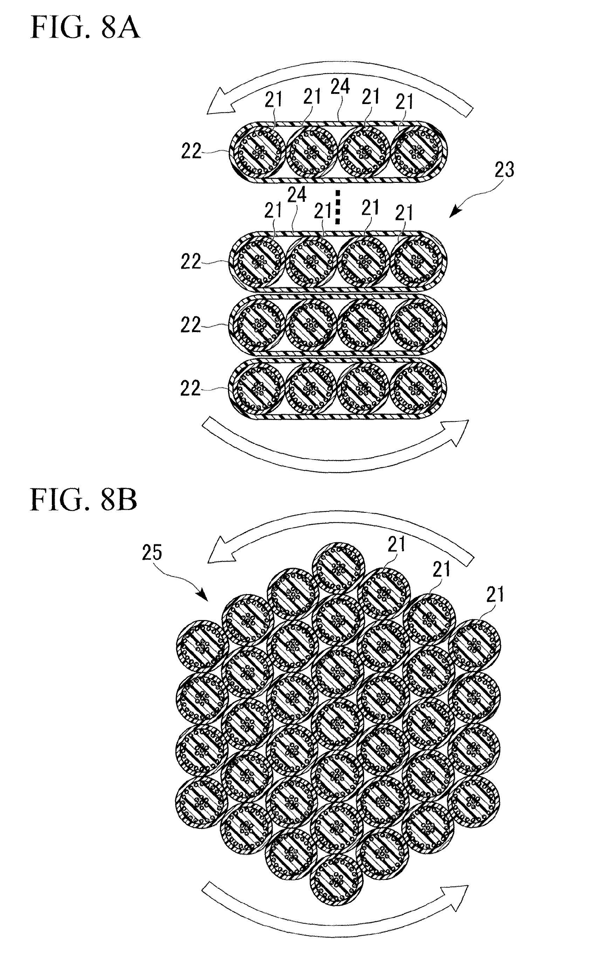

Here, as shown in FIG. 8A, when the flat cable part 23 is applied to the rotating portion of the rotatable electronic device as in the embodiment, the flat cable part is more susceptible to stress due to twisting than a bundle (see FIG. 8B) of normal micro coaxial cables. Therefore, the flat cable part 23 is disposed at the portion of the fixed-side housing 2 facing the movable-side housing 4 side (that is, the inside of the receiving portion 9 of the fixed-side housing 2), whereby it is possible to perform twisting while following the rotational movement of the movable-side housing 4 without putting unnecessary stress on the flat cable part 23 (detailed description will follow).

In addition, since the flat cable part 23 is wound in an α-shape, the line length of each of the flat cable 22 constituting this flat cable part is set so as to gradually increase with movement from the inner side in the radial direction of the wound flat cable part 23 to the outer side in the radial direction thereof.

Moreover, when the width dimension in the parallel direction of the micro coaxial cable 21 of the flat cable 22 in the flat cable part 23 is set to Wf, the width dimension in the thickness direction (vertical direction of paper in FIG. 4) of the movable-side housing 4 in the first connector 26 is set to We, and the depth dimension of the receiving portion 9 is set to Hf (see FIG. 3), the width dimension Wf of the flat cable 22 and the width dimension We of the first connector 26 are set so as to satisfy the following Expression (1).

$$Hf > Wf + Wc \cdots (1)$$

The width dimension Wf of the flat cable 22 and the width dimension Wc of the first connector 26 are set so as to satisfy Expression (1), whereby it is possible to achieve the thinning of the electronic device 1 without the need for setting the depth dimension Hf of the receiving portion 9 to be larger than necessary. For a specific example, the width dimension Wf of the flat cable 22 can be set to 1 mm or so, the width dimension Wc of the first connector 26 can be set to 1.5 mm or so, and the depth dimension Hf of the receiving portion 9 can be set to 3 mm or so. Meanwhile, the thickness Tf of the flat cable 22 can be set to 0.36 mm or so.

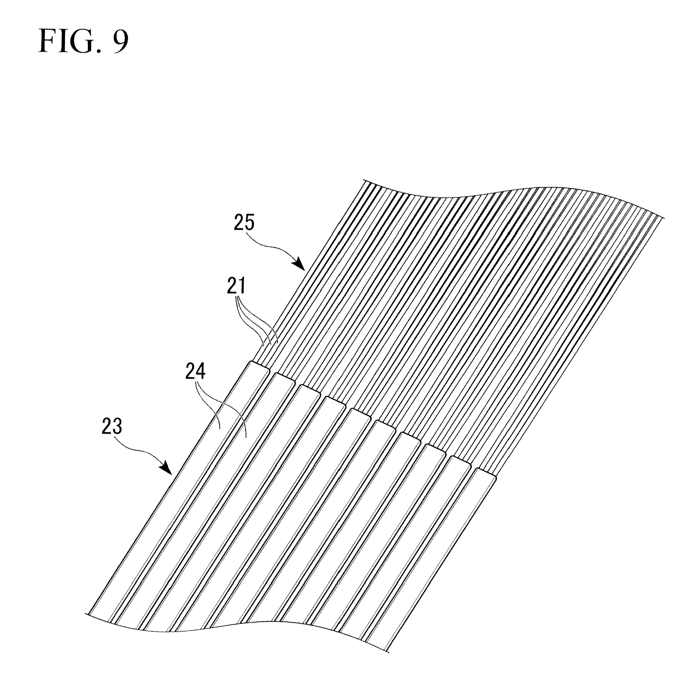

On the other hand, as shown in FIGS. 4 and 9, the jacket strip part 25 is a structure in which the micro coaxial cables 21 are exposed by removing all one-sided jackets 24 from a predetermined position in the length direction of the flat cable part 23, and both ends thereof are bundled by the bundle member 28. In the embodiment, since the jacket strip part 25 for applying the rotating portion of the rotatable electronic device 1 is formed as a structure in which the jackets 24 of the flat cable part 23 are removed, there is an advantage that the harness can be produced simply and inexpensively, for example, compared to a harness structure (not shown) in which the FPC and the micro coaxial cables are solder-connected with each other.

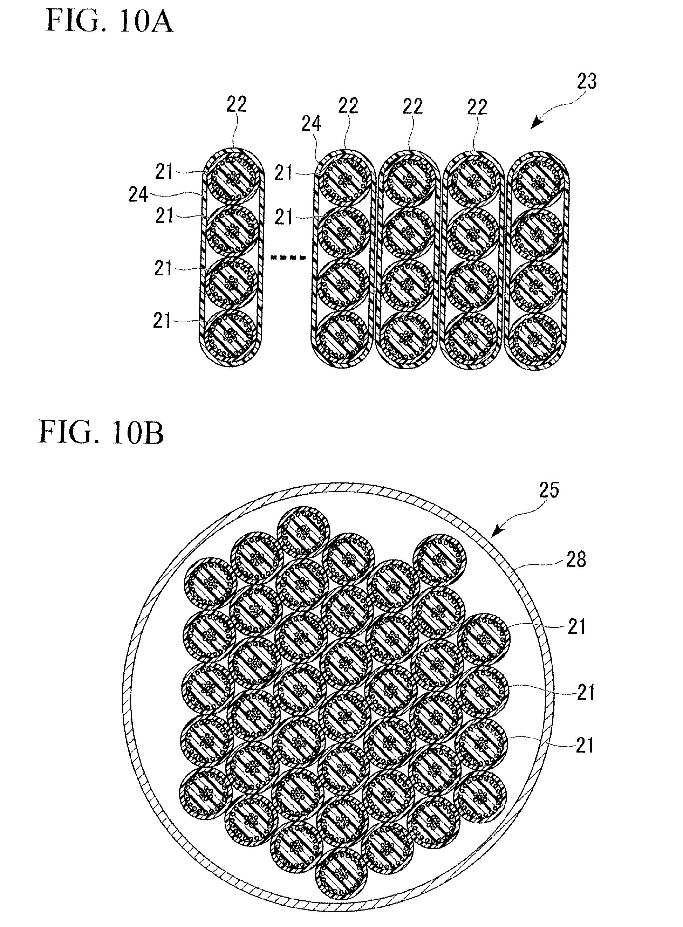

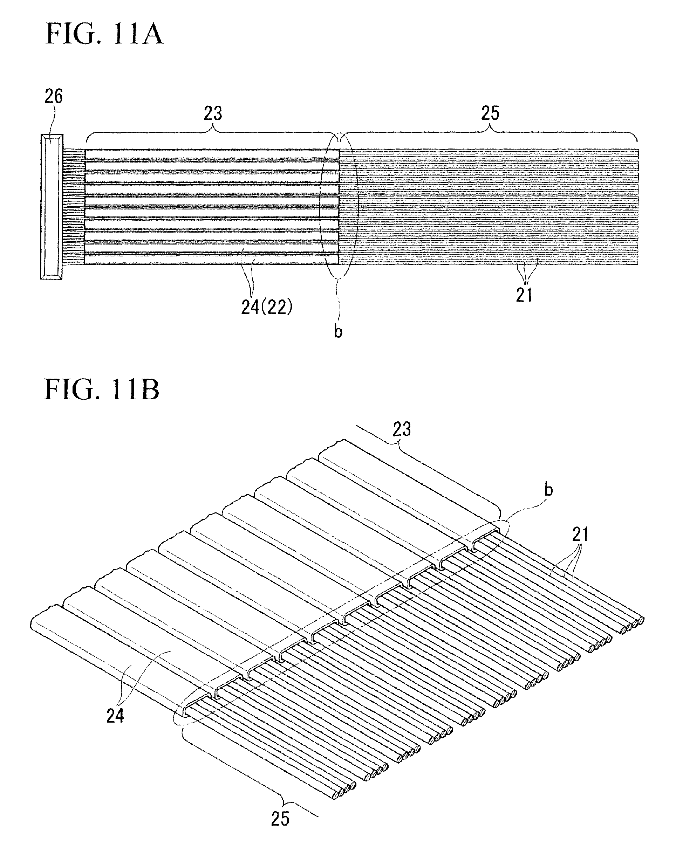

As shown in FIGS. 10A to 11B, the boundary b between the flat cable part 23 and the jacket strip part 25 is preferably formed in a straight line along the direction of the width dimension Wf (see FIG. 5) of the flat cable 22.

As a method of locally removing the jacket 24, the jacket 24 may be removed after the completion of the flat cable part 23. When a portion to which a jacket material is not applied is provided in a portion of the flat cable 22 during the creation of the flat cable 22, or an ultraviolet curable resin is used in the jacket, other methods may be performed by a method in which ultraviolet irradiation is not locally performed, and the like. In this way, a plurality of flat cables 22 having a portion in which the jacket 24 is not formed and the micro coaxial cable 21 is exposed is created and overlaps one another while the boundary positions in regard to the presence or absence of the jacket 24 in the flat cables are aligned with each other, and then the flat cables are bundled, to thereby form the boundary b.

Referring back to FIGS. 3 and 4. the terminal portion of the jacket strip part 25 is extracted into the concave portion 10 through the bundle member 28. The second connector 27 provided in the terminal portion of the jacket strip part 25 is formed in an approximately rectangular plate shape. A plurality of connection terminals 27b electrically connected to the circuit board 5 is exposed and disposed at a surface 27a (surface above the paper in FIG. 4) of the second connector 27 facing the circuit board 5 side. The second connector 27 is removably connected with respect to the circuit board 5 along the thickness direction of the fixed-side housing 2.

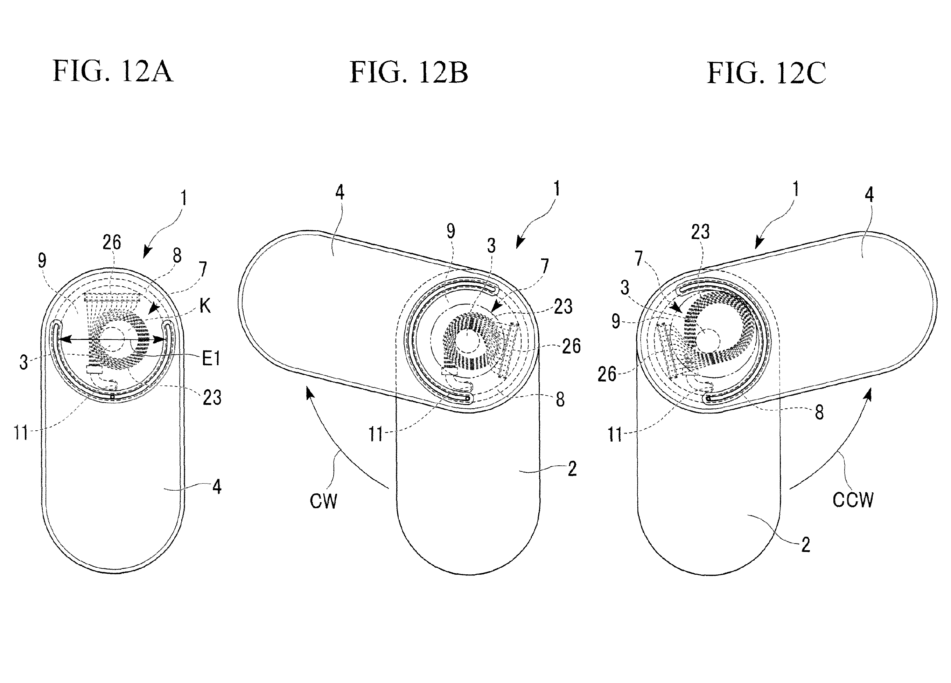

Next, an operation of the harness 7 for electronic device wiring will be described with reference to FIGS. 12A to 12C.

As shown in FIG. 12A, in the closed state where the fixed-side housing 2 and the movable-side housing 4 overlap each other, the flat cable part 23 of the harness 7 for electronic device wiring is formed in an α-shape when seen in a plan view along the shaft line of the rotary shaft 3 so that the sufficient void K is formed between the flat cable part and the rotary shaft 3.

Next, as shown in FIG. 12B, when the movable-side housing 4 is rotated clockwise (in the direction of the arrow CW in FIG 12B) with respect to the fixed-side housing 2, the first connector 26 of the flat cable part 23 is rotated clockwise together with the movable-side housing 4.

Then, the flat cable part 23 is displaced into the form in which the α-shaped portion (see the dashed-two dotted line portion in FIG. 12B) is reduced in diameter following the rotation of the first connector 26.

On the other hand, as shown in FIG. 12C, when the movable-side housing 4 is rotated counterclockwise (in the direction of the arrow CCW in FIG. 12C) with respect to the fixed-side housing 2, the first connector 26 of the flat cable part 23 is rotated counterclockwise together with the movable-side housing 4.

Then, the flat cable part 23 is displaced so that the portion (see the dashed-two dotted line portion in FIG. 12C) wound in an α-shape is expanded in diameter following the rotation of the first connector 26.

Here, as shown in FIGS. 12B and 12C, when the movable-side housing 4 is rotated, the flat cable part 23 has a configuration in which since the shape of the portion wound in an α-shape merely changes with the rotational movement of the movable-side housing 4, the local bent portion is not formed. That is, the portion, wound in an α-shape, of the flat cable part 23 is "overall" transformed (expanded in diameter or reduced in diameter) with the rotational movement of the movable-side housing 4, but a portion thereof is not locally transformed. In addition, since the flat cable part 23 is wound in an α-shape, it is possible to easily set the rotation range of the movable-side housing 4 to be large by setting the portion wound in an α-shape to a desired size in consideration of the amount of displacement of the portion wound in an α-shape.

That is, in the state where the flat cable part 23 is wired in an α-shape, the line length of the inner side in the radial direction of the flat cable part 23 and the line length of the outer side in the radial direction may be set on the basis of the rotation range of the movable-side housing 4, and the diameter of the receiving portion 9 (rising portion 8) of the fixed-side housing 2.

For example, in the embodiment, the movable-side housing 4 can be rotated in a range of ±180° from the state where it is closed, that is, the state (see FIG. 12A) where it overlaps the fixed-side housing 2. Therefore, in the state where the movable-side housing 4 is rotated clockwise (CW) 180° from the closed state, the line length of the inner side in the radial direction of the flat cable part 23 is set so that the inner side of the flat cable part 23 is not in contact with the rotary shaft 3.

On the other hand, when the movable-side housing 4 is rotated counterclockwise (CCW) 180° from the closed state, the line length of the outer side in the radial direction of the flat cable part 23 is set so that the outer side of the flat cable part 23 is not in contact with the inner peripheral surface 8a of the rising portion 8 of the fixed-side housing 2.

On the other hand, the jacket strip part 25 of the harness 7 for electronic device wiring is inserted into the through-hole 11 formed at a position deviating from the rotary shaft 3. For this reason, even when the movable-side housing 4 is rotated, the flat cable part 23 is merely displaced (expanded in diameter or reduced in diameter), and the jacket strip part 25 is difficult to twist or bend.

Here, although the through-hole 1 is formed close to the inner peripheral surface 8a of the rising portion 8, this formation position is set further toward a position on the outer side in the radial direction than the range in which the α-shaped portion of the flat cable part 23 is displaced (expanded in diameter or reduced in diameter).

For this reason, even when the α portion of the flat cable part 23 is expanded in diameter and transformed, it is possible to prevent the through-hole 11 from being blocked by the flat cable part 23.

Moreover, even when the rotational movement of the movable-side housing 4 is performed, twisting or bending hardly occurs in the jacket strip part 25. Therefore, the internal diameter of the through-hole 11 is not required to be set to be uselessly large, and the reduction in diameter of the through-hole 11 is achieved.

Therefore, in the embodiment, since the jacket strip part 25 in which a plurality of micro coaxial cables 21 is bundled is wired at a position deviating from the rotary shaft 3, the jacket strip part 25 is difficult to twist. For this reason, it is possible to prevent the jacket strip part 25 from being disconnected, and to achieve life prolongation.

Here, when the flat cable part 23 is merely wired linearly from the through-hole 11 of the fixed-side housing 2 to the connection portion (not shown) of the first connector 26 provided in the circuit board 6 of the movable-side housing 4, there is a concern that the locally bent portion may be formed at the flat cable part 23 with the rotational movement of the movable-side housing 4. In such a case, there is a concern that the flat cable part 23 may be disconnected when the movable-side housing 4 is repeatedly rotated. In addition to this, there is a concern that large bending stress may be applied to the flat cable part 23, and the rotational movement of the movable-side housing 4 may not be smoothly performed.

However, in the embodiment, the flat cable part 23 wired in the receiving portion 9 of the fixed-side housing 2 is wound once around the rotary shaft 3 and is formed in an α-shape. Therefore, even when the flat cable part 23 is displaced with the rotation of the movable-side housing 4, it is possible to prevent a bent portion such as those which locally generate stress from being formed in this flat cable part 23. For this reason, it is possible to prevent the flat cable part 23 from being disconnected, and to achieve life prolongation. In addition, since the flat cable part 23 is configured to be wound in an α-shape, it is possible to easily set the rotation range of the movable-side housing 4 to be large by setting the portion wound in an α-shape to a desired size in consideration of the amount of displacement (expansion in diameter or reduction in diameter) of the portion wound in an α-shape.

Further, since the flat cable part 23 is easily followed by the rotational movement of the movable-side housing 4, the rotational movement of the movable-side housing 4 can be smoothly performed.

Since the through-hole 11 for inserting the jacket strip part 25 is formed at a position deviating from the rotary shaft 3, it is possible to solidly form the rotary shaft 3 for axially supporting the movable-side housing 4 to be rotatable with respect to the fixed-side housing 2. For this reason, the electronic device 1 can be easily thinned and miniaturized.

In addition, the width dimension Wf of the flat cable 22 and the width dimension Wc of the first connector 26 are set so as to satisfy the following Expression (2) with respect to the depth dimension Hf of the receiving portion 9.

$$Hf > Wf + Wc \cdots (2)$$

For this reason, it is possible to achieve the thinning of the electronic device 1 without setting the depth dimension Hf of the receiving portion 9 to be larger than necessary.

Further, since the formation position of the through-hole 11 is set further toward a position on the outer side in the radial direction than the range in which the portion wound in an $\alpha$-shape of the flat cable part 23 is displaced, it is possible to prevent the through-hole 11 from being blocked by the flat cable part 23 with the rotation of the movable-side housing 4. For this reason, it is possible to prevent the flat cable 22 and the bundle member 28 or the jacket strip part 25 from interfering with each other more than necessary, and to prevent the harness 7 for electronic device wiring from being damaged. In addition, the rotation of the movable-side housing 4 can be smoothly performed.

Meanwhile, the present invention is not limited only to the above-mentioned embodiment, but includes those obtained by adding various modifications to the above-mentioned embodiment without departing from the scope of the present invention.

For example, in the above-mentioned embodiment, a case has been described in which the first connector 26 provided in the terminal portion of the flat cable part 23 is removably connected to the circuit board 6 along the thickness direction of the movable-side housing 4. Further, a case has been described in which the second connector 27 provided in the terminal portion of the jacket strip part 25 is removably connected to the circuit board 5 along the thickness direction of the fixed-side housing 2. However, the embodiment is not limited only to this configuration, and the first connector 26 may be removably provided so as to be along the surface of the circuit board 6, and the second connector 27 may be removably provided so as to be along the surface of the circuit board 5.

The state where the flat cable part 23 is wound in an $\alpha$-shape means that in the rotation range of the movable-side housing 4, the flat cable part 23 is formed in an $\alpha$ shape at least at an arbitrary rotation position of the movable-side housing 4. According to such a configuration, it is possible to prevent the locally bent portion from occurring in the flat cable part 23, and to achieve life prolongation of the flat cable part 23.

Industrial Applicability

According to the harness for electronic device wiring and the electronic device of the present invention, it is possible to achieve thinning, miniaturization, or weight saving in regard to the electronic device, to prevent the cable from being disconnected, and to achieve life prolongation of the cable.

Description of Reference Numerals and Signs

| | |
|---|---|
| 1: | ELECTRONIC DEVICE |
| 2: | FIXED-SIDE HOUSING |
| 3: | ROTARY SHAFT |
| 4: | MOVABLE-SIDE HOUSING |
| 5: | CIRCUIT BOARD |
| 6: | CIRCUIT BOARD |
| 7: | HARNESS FOR ELECTRONIC DEVICE WIRING |
| 9: | RECEIVING PORTION (FLAT CABLE RECEIVING PORTION) |
| 11: | THROUGH-HOLE |
| 21: | MICRO COAXIAL CABLE (ELECTRICAL WIRE) |
| 22: | FLAT CABLE |
| 23: | FLAT CABLE PART |
| 24: | JACKET |
| 25: | JACKET STRIP PART |
| 26: | FIRST CONNECTOR (CONNECTOR) |
| 21b: | CONNECTION TERMINAL |
| Hf: | DEPTH DIMENSION |
| Wc: | WIDTH DIMENSION |
| Wf: | WIDTH DIMENSION |

**Claims**

1. A harness for electronic device wiring that electrically connects a first circuit board provided in a fixed-side housing having an overlapping surface and a second circuit board provided in a movable-side housing which is attached to the fixed-side housing so as to be rotatable about a rotary shaft perpendicular to the overlapping surface, comprising:

   a plurality of electrical wires that connect the first circuit board and the second circuit board, and a jacket that covers these electrical wires so that a portion in a longitudinal direction thereof is exposed,
   wherein a portion covered by the jacket in a state where each of the electrical wires is bundled so as to be arranged in parallel with each other forms a flat cable part wound around the rotary shaft so that a parallel direction thereof is perpendicular to the overlapping surface, and
   the portion which is continuous with the flat cable part and in which each of the electrical wires is exposed forms a jacket strip part which is more distant from the rotary shaft than the flat cable part is.

2. The harness for electronic device wiring according to claim 1, wherein the flat cable part is wound once around the rotary shaft and is formed in an $\alpha$-shape.

3. The harness for electronic device wiring according to claim 1. wherein the jacket strip part is disposed further toward an outer side in a radial direction of the rotary shaft than a range in which the flat cable part is displaced with a rotation of the movable-side housing.

4. The harness for electronic device wiring according to claim 1, further comprising a connector that removably connects the flat cable part with respect to the second circuit board.

5. The harness for electronic device wiring according to claim 4, wherein when a width dimension in the parallel direction of each of the electrical wires in the flat cable part is set to Wf, a width dimension in a direction perpendicular to the overlapping surface of the connector is set to Wc, and a depth dimension of a flat cable receiving portion, provided in the fixed-side housing, for receiving the flat cable part is set to Hf,
the width dimension Wf of the flat cable part and the width dimension Wc of the connector satisfy the following expression

$$Hf > Wf + Wc.$$

6. An electronic device comprising:

   the harness for electronic device wiring according to claim 1;
   the fixed-side housing; and
   the movable-side housing,
   wherein a through-hole into which the jacket strip part is inserted is formed in the fixed-side housing at a position which is more distant from the rotary shaft than the flat cable part is, and a flat cable receiving portion that receives the flat cable part wound around the rotary shaft so that a parallel direction thereof is perpendicular to the overlapping surface is formed between the fixed-side housing and the movable-side housing.

7. The electronic device according to claim 6, wherein the movable-side housing is rotatable in a range of $\pm180°$ from a state of overlapping the fixed-side housing.

FIG. 1

# FIG. 2

FIG. 3

EP 2 383 753 A1

# FIG. 4

# FIG. 5

FIG. 6A

FIG. 6B

FIG. 7

FIG. 8A

FIG. 8B

FIG. 9

## FIG. 10A

## FIG. 10B

FIG. 11A

FIG. 11B

FIG. 12A    FIG. 12B    FIG. 12C

<table>
<tr><td colspan="2" align="center">**INTERNATIONAL SEARCH REPORT**</td><td colspan="2">International application No.<br>PCT/JP2010/000803</td></tr>
</table>

**A. CLASSIFICATION OF SUBJECT MATTER**
*H01B7/00*(2006.01)i, *H01B7/04*(2006.01)i, *H01B7/08*(2006.01)i, *H02G11/00* (2006.01)i, *H04M1/02*(2006.01)i, *H01B11/20*(2006.01)n

According to International Patent Classification (IPC) or to both national classification and IPC

**B. FIELDS SEARCHED**

Minimum documentation searched (classification system followed by classification symbols)
H01B7/00, H01B7/04, H01B7/08, H02G11/00, H04M1/02, H01B11/20

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Takashi MATSUKAWA et al., "Slide-gata Keitai Denwa Muke Gokuboso Dojiku Cable Assembly", Fujikura Technical Journal, 2008, no.114, pages 21 to 26 | 1-7 |
| A | JP 2008-257969 A (Fujikura Ltd.), 23 October 2008 (23.10.2008), entire text (Family: none) | 1-7 |
| A | JP 2008-263264 A (Fujikura Ltd.), 30 October 2008 (30.10.2008), entire text (Family: none) | 1-7 |

☒  Further documents are listed in the continuation of Box C.          ☐  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>10 May, 2010 (10.05.10) | Date of mailing of the international search report<br>18 May, 2010 (18.05.10) |
| Name and mailing address of the ISA/<br>    Japanese Patent Office | Authorized officer |
| Facsimile No. | Telephone No. |

Form PCT/ISA/210 (second sheet) (July 2009)

EP 2 383 753 A1

| INTERNATIONAL SEARCH REPORT | International application No. |
|---|---|
| | PCT/JP2010/000803 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-257970 A (Fujikura Ltd.),<br>23 October 2008 (23.10.2008),<br>entire text<br>(Family: none) | 1-7 |
| A | JP 2003-46275 A (Fujitsu Ltd.),<br>14 February 2003 (14.02.2003),<br>entire text<br>& US 2004/0160748 A1    & EP 1416781 A1<br>& WO 2003/013205 A1    & CN 1537408 A | 1-7 |
| A | JP 4-233298 A (Alcatel Radiotelephone),<br>21 August 1992 (21.08.1992),<br>entire text<br>& US 5141446 A        & EP 464767 A1<br>& DE 69108995 C       & FR 2664438 A<br>& AT 121576 E        & ES 2071867 T<br>& DK 464767 T        & AT 121576 T | 1-7 |
| A | JP 2007-36515 A (Sumitomo Electric Industries,<br>Ltd.),<br>08 February 2007 (08.02.2007),<br>entire text<br>(Family: none) | 1-7 |
| A | JP 2008-210583 A (Junkosha Co., Ltd.),<br>11 September 2008 (11.09.2008),<br>entire text<br>(Family: none) | 1-7 |
| A | WO 2007/136040 A1 (Sumitomo Electric<br>Industries, Ltd.),<br>29 November 2007 (29.11.2007),<br>entire text<br>& KR 10-2008-0038182 A  & CN 101341726 A | 1-7 |
| A | JP 2007-311934 A (Toshiba Corp.),<br>29 November 2007 (29.11.2007),<br>entire text<br>(Family: none) | 1-7 |
| A | JP 2000-138522 A (Kyocera Corp.),<br>16 May 2000 (16.05.2000),<br>entire text<br>(Family: none) | 1-7 |
| A | JP 2004-40524 A (Murata Mfg. Co., Ltd.),<br>05 February 2004 (05.02.2004),<br>entire text<br>(Family: none) | 1-7 |

Form PCT/ISA/210 (continuation of second sheet) (July 2009)

23

| INTERNATIONAL SEARCH REPORT | International application No. |
|---|---|
| | PCT/JP2010/000803 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | WO 2009/063919 A1  (Fujikura Ltd.),<br>22 May 2009 (22.05.2009),<br>fig. 7, 14<br>& JP 2009-141934 A | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009030097 A

- JP 2007036515 A